# FASCICULE DE BREVET EUROPEEN

(11) **EP 0 687 894 B1**
(45) Date de publication et mention de la délivrance du brevet: **20.03.2002**
(21) Numéro de dépôt: 95401344.7
(22) Date de dépôt: 09.06.1995
(51) Int. Cl.: G01J 1/04, H05B 37/02

(54) **Détecteur de seuil de luminosité pour commande de l'éclairage public**
Detektor einer Helligkeitsschwelle zum Steuern einer öffentlichen Beleuchtungsanlage
Detector of a luminosity threshold for controlling a public lighting system

(30) Priorité: 09.06.1994 FR 9407073
(43) Date de publication de la demande: 20.12.1995
(73) Titulaire: L 2 G, F-76370 Martin-Eglise (FR)
(72) Inventeur: Leroy, Sébastien, F-80880 Saint-Quentin Lamotte (FR); Gainville, Maurice, F-76200 Dieppe (FR)
(74) Mandataire: Plaçais, Jean-Yves

(56) Documents cités:
- EP-A- 0 098 521
- WO-A-93/04345
- DE-B- 1 813 306
- US-A- 4 843 283
- PATENT ABSTRACTS OF JAPAN vol. 13 no. 245 (P-881) ,8 Juin 1989 & JP-A-01 047919 (MATSUSHITA) 22 Février 1989,

## Description

L'invention concerne un détecteur de seuil d'intensité lumineuse ambiante, destiné à commander localement l'éclairage public.

De tels détecteurs sont déjà utilisés en milieu urbain, pour commander automatiquement le déclenchement ou l'interruption d'un éclairage, voire son réglage.

L'éclairage en communauté urbaine est déclenché généralement en fin de journée, au coucher du soleil (crépuscule), sur détection du franchissement vers le bas d'un seuil d'intensité lumineuse; il est interrompu en début de journée, au lever du soleil (aube), sur détection du franchissement d'un seuil vers le haut. En général, ces détecteurs mesurent l'intensité lumineuse en continu. Ils peuvent donc agir sur l'éclairage public à tout moment de la journée en fonction de l'intensité lumineuse mesurée.

Les dispositifs connus, notamment ceux décrits dans les documents GB 2 261 945 et GB 1 568 470, sont souvent installés à proximité d'un poste de commande de l'éclairage local. Ils sont munis d'une cellule dite "crépusculaire", chargée de mesurer l'intensité de la lumière ambiante, et fonctionnent dans la bande spectrale visible s'étendant généralement entre 400 nanomètres et 730 nanomètres. Ces cellules sont en général connectées à un comparateur électronique (par exemple de type amplificateur opérationnel ou transistor), chargé d'effectuer une comparaison entre l'intensité mesurée et un seuil (en courant ou en tension) préalablement fixé. La sortie de ce comparateur est connectée au circuit de commande d'éclairage concerné par la détection.

Il est également connu de prévoir une temporisation pour mémoriser des horaires de déclenchement des mesures, et éventuellement de commander l'alimentation de la cellule de mesure seulement pendant les horaires ainsi mémorisés.

La mise au point de ces dispositifs n'est simple qu'en apparence. En effet, on observe souvent d'une part des déclenchements injustifiés de l'éclairage public, d'autre part des situations où il ne fonctionne pas alors qu'il devrait être en action. Le problème est d'améliorer les choses, en économisant l'énergie.

Un aspect du problème tient au fait qu'au moment où il faut détecter, l'émission solaire se présente sous incidence rasante, caractéristique des levers et couchers du soleil. Il en résulte des modifications spectrales sur lesquelles on reviendra plus loin.

Un autre aspect du problème, climatologique, tient à ce que ce phénomène de diffusion s'applique également aux atmosphères brumeuses et aux zones de brouillard, comme on le verra également plus loin.

Ces effets, qui peuvent s'additionner, vont entraîner une modification notable de l'intensité lumineuse ambiante mesurée par la cellule.

Il s'y ajoute que l'homme cherche lui-même à compenser lesdits effets (éclairage domestique, des véhicules, et des immeubles individuels ou collectifs). Ceci complique le problème.

A coté de cela, différents facteurs font que, dans les détecteurs actuels, on tend à orienter l'axe de la cellule de détection vers le sol, perpendiculairement ou obliquement.

La présente invention a pour but d'améliorer sensiblement la situation, en apportant des solutions à ces problèmes.

Un premier but de l'invention est de s'affranchir des problèmes liés à la fois à l'incidence rasante aux levers et couchers du soleil, ainsi qu'à l'influence des conditions climatologiques au moment des mesures.

Un second but de l'invention est de s'affranchir presque totalement des lumières parasites, et donc de l'environnement, pouvant influencer les mesures de l'intensité lumineuse ambiante.

Un troisième but de l'invention est de rendre le dispositif plus fiable.

L'invention part des dispositifs connus, dont le fonctionnement a été explicité précédemment.

Le dispositif selon l'invention est défini dans la revendication indépendante 1 et le procédé dans la revendication indépendante 12.

Dans un mode de réalisation, il est prévu une photodiode infrarouge calibrée et centrée sur une longueur d'onde d'environ 950 nanomètres, ladite photodiode étant logée dans un boîtier, en un lieu ouvert, sans protection particulière.

Avantageusement, la photodiode est positionnée dans le boîtier parallèlement au sol, sa face de détection étant orientée vers le ciel.

Dans un autre mode de réalisation, il est prévu un jeu de deux photodiodes infrarouges, calibrées et centrées sur une longueur d'onde d'environ 950 nanomètres, lesdites photodiodes étant fixées, chacune, sur un support incliné. Le jeu de photodiodes est également logé dans un boîtier, en un lieu ouvert, sans protection particulière.

Dans ce second mode de réalisation de l'invention, le boîtier contenant le jeu de deux photodiodes est installé sur le lieu de mesure, de telle sorte que les photodiodes soient respectivement orientées l'une vers l'ouest, l'autre vers l'est.

Selon une autre caractéristique de l'invention, les moyens de traitement comprennent en outre une temporisation programmable apte à mémoriser au moins une durée de temporisation.

Avantageusement, les moyens de traitement sont agencés pour ne prendre en compte le franchissement du seuil que s'il existe au moins pendant ladite durée de temporisation.

Cet aménagement permet ainsi de confirmer ou d'infirmer un passage de nuage, ou une éclaircie momentanée, ce qui évite d'intervenir précipitamment sur l'éclairage local.

Selon encore une autre caractéristique de l'invention, le bottier comporte, en regard de la face de détection de la ou des photodiodes, une fenêtre transparente au moins au rayonnement infrarouge dans la bande spectrale comprise entre 730 nanomètres et 1300 nanomètres.

Par ailleurs, ladite fenêtre est bombée, et normalement tournée vers le ciel.

D'autres caractéristiques et avantages de l'invention apparaîtront à l'examen de la description détaillée ci-après, et des dessins annexés, sur lesquels :
- la figure 1 schématise le parcours des rayons solaires sous incidence rasante,
- la figure 2 représente l'influence de l'incidence rasante du soleil, aux levers et couchers, sur les composantes spectrales du rayonnement solaire mesuré sur terre,
- la figure 3 représente l'influence des conditions climatiques sur les composantes spectrales du rayonnement solaire mesuré sur terre,
- la figure 4 représente de façon schématique les éléments constituant le dispositif,
- la figure 5 est un organigramme décrivant le fonctionnement dudit dispositif, et
- les figures 6a et 6b représentent schématiquement deux modes de réalisation du dispositif.

Les dessins annexés sont, pour l'essentiel, de caractère certain. En conséquence, ils font partie intégrante de la description et pourront non seulement servir à compléter celle-ci, mais aussi contribuer à la définition de l'invention, le cas échéant.

Le spectre d'émission du soleil est bien connu de l'homme du métier. Celui-ci sait, entre autres, que le rayonnement solaire, qui atteint la terre, est principalement constitué de lumière visible et infrarouge.

L'oeil humain étant essentiellement sensible au spectre visible, les cellules utilisées pour la détection ont donc été choisies en fonction de caractéristiques de base proches de celles de l'oeil.

Or, pour ces questions de sensibilité, l'homme utilise des systèmes d'éclairage émettant dans le visible, que ce soit pour l'éclairage domestique, ou pour l'éclairage des véhicules qu'il pilote. Cela perturbe notablement les cellules actuellement utilisées.

De plus, au coucher et au lever du soleil, ses rayons doivent traverser une épaisseur d'air beaucoup plus importante et plus dense que sous incidence verticale, ce qui favorisera leur diffusion, et donc leur absorption apparente.

En effet, comme cela a été établi par Lord Rayleigh, l'aspect particulaire d'un gaz entraîne la diffusion de toute longueur d'onde le traversant, lorsque la longueur d'onde considérée est inférieure à la taille des particules formant ledit gaz, ce qui est notamment le cas de l'atmosphère qui entoure la terre. L'intensité lumineuse diffusée par le gaz est alors inversement proportionnel à la longueur d'onde puissance quatre. Il en résulte que les longueurs d'onde les moins diffusées sont celles qui sont les plus grandes.

La lumière transmise au sol sera donc d'autant plus "colorée" en rouge que l'épaisseur de la couche atmosphérique sera grande, ce qui est notamment le cas sous incidence rasante.

Dans la journée, ce phénomène de diffusion s'applique également aux atmosphères brumeuses et aux zones de brouillard.

Il est bien connu que la présence de nuages ou de masses d'air sur le trajet de rayons lumineux entraîne une forte absorption de certaines composantes spectrales de ceux-ci indépendamment de leur longueur d'onde. En effet, un nuage absorbe de façon apparente 1000 fois plus que ne le fait le phénomène de diffusion atmosphérique décrit ci-dessus. En présence de nuages passagers, le détecteur aura donc tendance à déclencher l'éclairage local, même en plein jour, de façon passagère et parfois inutile.

A l'encontre des habitudes admises, le Demandeur a constaté que la bande spectrale infrarouge émise par le soleil n'était pratiquement pas sensible à l'angle d'incidence et/ou aux variations climatologiques, à l'exception des nuages.

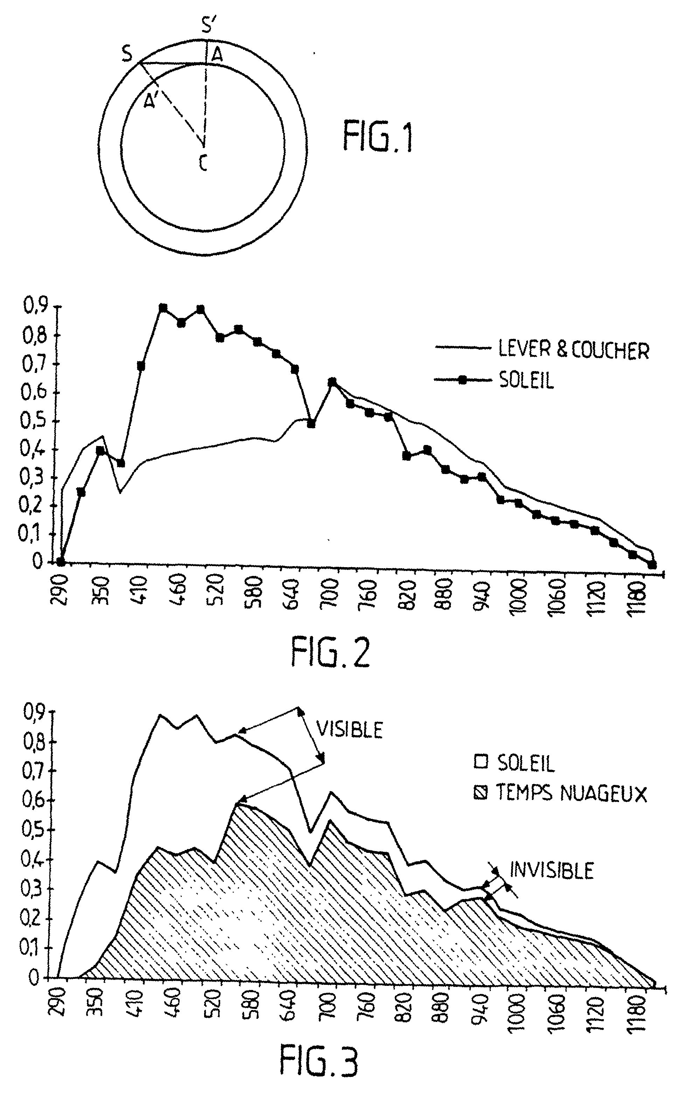

Si l'on se réfère à la figure 1, nous pouvons voir qu'en incidence rasante, le rayonnement solaire doit parcourir une distance SA dans l'atmosphère terrestre, alors que sous incidence verticale, ce même rayonnement n'a plus qu'à parcourir la distance S'A. Si S'A vaut environ 100 kilomètres, en revanche SA vaut environ 1000 kilomètres lorsque l'angle d'incidence est inférieur à 5°. La masse d'air que le rayonnement solaire doit donc traverser aux levers et aux couchers du soleil est beaucoup plus importante qu'au zénith.

Or, comme nous pouvons le constater sur la figure 2, ce sont principalement les composantes spectrales comprises entre 400 nanomètres et 650 nanomètres qui sont préférentiellement absorbées par les masses d'air qu'elles doivent traverser. On peut d'ailleurs constater une baisse relative très importante des couleurs spectrales bleu et vert dont les longueurs d'ondes se situent entre 460 et 560 nanomètres. Les précédentes longueurs d'ondes faisant partie du spectre visible, il est donc clair que le rendement des cellules de détection, détectant dans le visible, sera notablement diminué aux levers et couchers du soleil. Cet affaiblissement marqué d'une partie du spectre visible contribue à favoriser prématurément la mise en service des postes d'éclairage public munis de cellules détectant dans le visible.

En revanche, toujours en référence à la figure 2, dans la bande spectrale infrarouge comprise entre 750 nanomètres et 1200 nanomètres, l'incidence du rayonnement solaire n'a quasiment pas d'influence sur les composantes spectrales infrarouges de ce même rayonnement. Au contraire, on peut même constater un léger renforcement apparent de l'ensemble des composantes spectrales situées dans la bande infrarouge, sous incidence rasante.

Par ailleurs, si l'on se réfère à la figure 3, un affaiblissement caractéristique dans la longueur d'onde du visible et très légèrement matérialisé dans la longueur d'onde des infrarouges, peut être observé lorsque le rayonnement solaire est soumis à une modification de la couverture nuageuse. Il en résulte que la notion de brusque assombrissement liée à une modification de cette couverture nuageuse n'a pas du tout la même incidence lorsque l'on détecte dans le visible ou dans l'invisible et préférentiellement dans l'infrarouge.

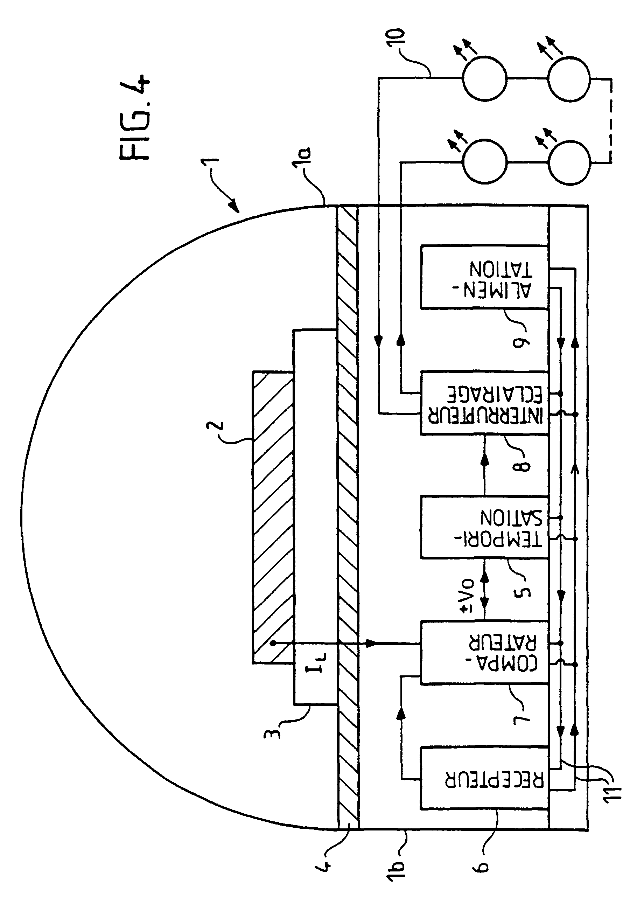

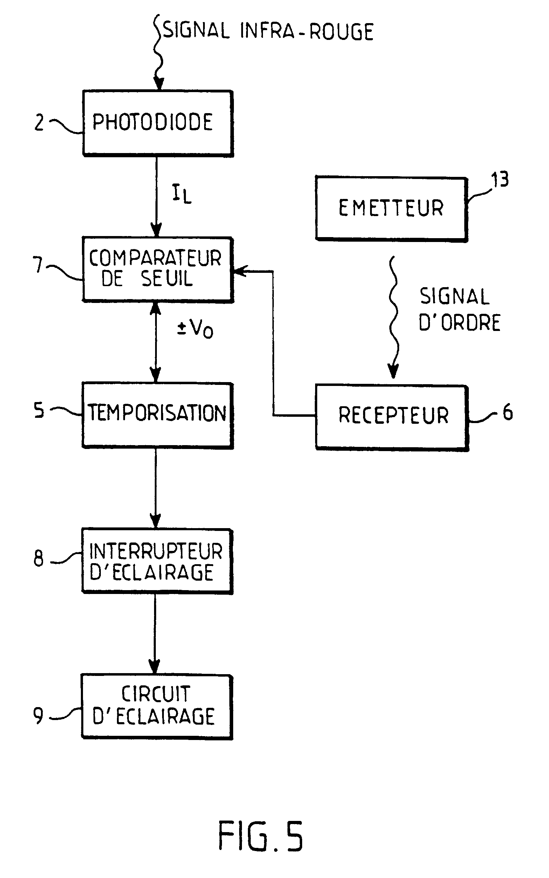

Il est maintenant fait référence aux figures 4 et 5 pour la description des éléments constituant le dispositif et leurs relations.

L'ensemble du dispositif de détection de seuil est logé dans un boîtier 1. Il comprend une cloison 4 permettant d'isoler dans sa partie supérieure 1a au moins une photodiode 2 fixée sur un support 3. Ce dernier repose au moins en partie sur la cloison 4. La photodiode utilisée est calibrée sur une largeur de bande d'environ 150 nanomètres, laquelle est centrée sur une longueur d'onde d'environ 950 nanomètres. Pour ce faire, on pourra utiliser par exemple les photodiodes BPW-34F de type PIN fabriquées par la Société CENTRONIC.

La partie supérieure 1a du boîtier est préférentiellement en forme de demi-calotte sensiblement ovoïde, ce qui lui assure une bonne résistance aux chocs, et permet les écoulements comme par exemple ceux dus à la pluie.

Cette partie supérieure 1a comprend une fenêtre en regard de la face de détection de la ou des photodiodes 2. Cette fenêtre est transparente au moins dans l'infrarouge, et de préférence dans la bande spectrale comprise entre 730 nanomètres et 1200 nanomètres.

Dans la partie inférieure 1b dudit boîtier 1 sont logés les autres éléments du dispositif.

Ils comprennent tout d'abord un comparateur électronique 7 de courant ou de tension, de type amplificateur opérationnel ou transistor, apte à comparer respectivement un courant ou une tension proportionnel à l'intensité de la lumière ambiante mesurée par la photodiode 2, à un seuil préalablement fixé, dont la valeur peut être modifiée en fonction des saisons, par exemple grâce à une résistance variable.

Lorsque l'intensité mesurée est supérieure au seuil, le comparateur délivre un signal V0. Lorsque l'intensité mesurée est inférieure à ce même seuil, le comparateur délivre un signal -V0 de même intensité, mais de signe opposé au cas précédent. Le signal délivré par le comparateur 7 est pris en compte par deux groupes de composants formant chacun un interrupteur.

Le premier groupe 8 comprend un composant électronique ou électromécanique de puissance formant interrupteur, apte à ouvrir ou fermer un circuit d'éclairage 10 en fonction de la valeur du signal d'entrée ±V0.

Le deuxième groupe 5 contient un composant électronique, formant temporisation programmable, qui permet la mémorisation d'au moins une durée de temporisation préalablement fixée, de préférence 3 minutes.

A chaque franchissement de seuil, la temporisation 5 se met automatiquement en action. Lorsque la durée de temporisation est écoulée, et si le franchissement de seuil est confirmé, la temporisation actionne l'interrupteur d'éclairage 8 qui passe alors de son état ouvert à son état fermé, ou inversement.

En cas de non confirmation du premier franchissement de seuil, c'est-à-dire après retour à une tension identique à celle précédent le premier franchissement, aucune action n'est entreprise sur l'interrupteur qui reste alors en l'état.

Lorsque le signal délivré par le comparateur 7 change de signe, une procédure identique à celle décrite ci-dessus est effectuée.

Par ailleurs, le boîtier 1 est muni d'un récepteur 6 apte à recevoir des signaux émis par un émetteur 13 éloigné dudit boîtier 1.

Les signaux ont pour but d'anticiper ou de retarder l'ouverture ou la fermeture du circuit d'éclairage 9, afin de tenir compte de modifications quant à l'environnement immédiat du boîtier 1.

Ces modifications peuvent être liées par exemple à des zones d'ombre introduites par la présence de feuilles dans les arbres voisins du boîtier 1, ou bien par des travaux locaux.

Renseigné de ces conditions particulières, le central municipal qui loge l'émetteur 13 est apte à décider d'envoyer en direction d'un ou plusieurs capteurs un signal d'ordre spécifique à sa position.

A réception du signal d'ordre, le récepteur 6 provoque l'augmentation ou la diminution de la valeur du seuil du comparateur de seuil 7 afin de respectivement retarder ou anticiper l'ouverture ou la fermeture du circuit d'éclairage 10.

Tant qu'il n'y a pas réception d'un signal d'ordre, le comparateur de seuil 7 conserve sa valeur de seuil interne.

Enfin, le boîtier 1 est également muni d'une alimentation propre 9, ou d'un raccordement sur le secteur 9. L'alimentation des éléments constituant le dispositif s'effectue par l'intermédiaire de câbles électriques 11.

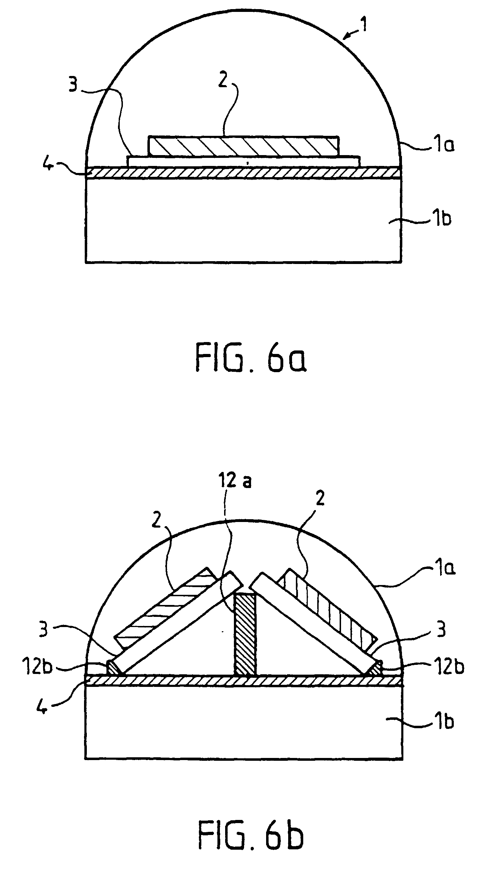

Il est maintenant fait référence à la figure 6 pour décrire deux modes de réalisation du dispositif.

Les détecteurs actuels sont souvent directionnels, leur axe de détection étant orienté vers le sol, perpendiculairement ou obliquement.

En effet, si la cellule était orientée vers le ciel, le boîtier de protection qui l'enferme présenterait une face supérieure parallèle à ce même ciel. En conséquence, cette face se salirait rapidement, entraînant par la même occasion le déclenchement de l'éclairage de plus en plus tôt et son arrêt de plus en plus tard.

Dans ces conditions d'orientation, toute source de lumière artificielle, émettant dans le visible et dirigée vers la cellule de détection, sera susceptible d'influencer sa mesure en augmentant de façon artificielle l'intensité lumineuse ambiante. Cela aura pour conséquence de fausser le critère de test sur seuil, qui a pour but de mesurer l'intensité de la lumière ambiante principalement émise par le soleil; d'où une surconsommation d'électricité pour la ville.

Le boîtier étant muni d'une partie supérieure 1b bombée, il est possible d'orienter l'axe de détection de la photodiode vers le ciel.

Le dispositif schématisé sur la figure 6a est préférentiellement adapté aux zones de mesure à faible ouverture, dans lesquelles l'émission solaire ne parvient principalement qu'après réflexion. Dans ce cas, on prévoit une photodiode 2 fixée sur un support 3 plan, lequel repose intégralement sur la cloison 4. La photodiode 2 est alors orientée parallèlement au sol terrestre, sa face de détection tournée vers le ciel, de façon à recueillir le maximum de signal.

Le dispositif schématisé sur la figure 6b est préférentiellement adapté aux zones de mesure largement dégagées, dans lesquelles l'émission solaire peut parvenir directement. Dans ce cas, on prévoit un jeu de deux photodiodes 2 fixées chacune sur un support 3, lequel est maintenu en position inclinée par rapport à la cloison 4 par des cales 12a et 12b dont les positions et les dimensions peuvent être ajustées en fonction de l'inclinaison désirée. Cette inclinaison est définie par l'angle α. L'inclinaison de la photodiode par rapport au sol peut ainsi être choisie en fonction de la topologie de la zone de mesure, de façon à recueillir le maximum de signal. Les photodiodes sont positionnées symétriquement selon des plans inclinés s'élevant au-dessus de la cloison 4, lesdits plans inclinés et ladite cloison 4 réalisant ainsi une structure de type triangulaire.

Le boîtier est ensuite fixé sur le lieu choisi, de telle façon que les deux photodiodes soient orientées respectivement l'une vers l'ouest (coucher du soleil), l'autre vers l'est (lever du soleil).

Ce second mode de réalisation illustré par la figure 6b permet une notable amélioration de l'efficacité de détection lorsque le soleil est en incidence rasante, et notamment vis-à-vis des dispositifs actuels, qui utilisent des cellules obligatoirement positionnées horizontalement par rapport au sol.

Le dispositif proposé présente plusieurs autres avantages vis-à-vis des dispositifs connus.

Premièrement, il résout le problème de l'éclairement parasite lié aux éclairages domestiques et aux véhicules, puisqu'il détecte le rayonnement infrarouge émis par le soleil et non le rayonnement visible. Cela a pour conséquence de simplifier notablement l'installation et donc la maintenance du dispositif, puisqu'il n'est plus nécessaire de munir le boîtier de protection contre ces rayonnements parasites dans le visible. Seul le rayonnement solaire est alors analysé.

Secondement, il permet de remplacer les photopiles et photorésistances usuellement utilisées par des photodiodes infrarouges dont la fiabilité dans le temps est bien supérieure.

Troisièmement, il permet de s'affranchir presque totalement de l'influence des masses d'air traversées, notamment en incidence rasante, ainsi que des brusques assombrissements liés à une modification de la couverture nuageuse.

Toutes ces améliorations vont entraîner d'importantes économies d'énergie pour la ville concernée, puisqu'elles vont permettre de suivre au plus près l'évolution de l'intensité lumineuse réellement rayonnée par le soleil, plutôt que celle filtrée par les masses d'air, lesquelles agissent principalement sur le spectre visible.

La variante proposée sur la figure 6b, permettant d'optimiser la réception du signal sur les photodiodes en fonction de la topologie du lieu de mesure, autorise une gestion locale plus fine, et donc une sensible augmentation des économies d'énergie.

Une autre variante intéressante consiste à utiliser une paire de photodiodes dont la longueur d'onde principale de travail est différente (ou plusieurs paires de photodiodes satisfaisant cette condition). Les deux longueurs d'onde principales de travail sont comprises dans la gamme allant d'environ 500 à environ 1300 nanomètres, de préférence d'environ 600 à environ 1100 nanomètres, c'est à dire dans l'infra-rouge jusqu'au début du visible, et espacées l'un de l'autre d'environ 100 nanomètres par exemple. Il a été observé que la différence entre les réponses des deux photodiodes permet de s'affranchir encore mieux de la lumière artificielle de diverses origines (lampes au sodium, à vapeur de mercure, fluorescentes ou à iodures métalliques, notamment, en ce qui concerne l'éclairage public; lampes à lumière chaude/ filament, telles que des lampes halogènes, notamment pour les véhicules ou l'éclairage privé). On peut alors "geler" le fonctionnement du dispositif en présence d'une telle lumière artificielle parasite.

En d'autres termes, le dispositif comprend au moins une paire de photodiodes opérant à des longueurs d'onde différentes, et des moyens sensibles à la différence de réponse entre ces deux photodiodes pour geler l'état des moyens de traitement.

Dans un mode de réalisation particulier, on choisit deux photodiodes qui, en outre, fournissent (à un facteur d'échelle près, le cas échéant) la même réponse à une densité lumineuse solaire particulière (de préférence au lever ou au coucher du soleil, selon par exemple l'orientation de la paire de photo-diodes, chaque photodiode de la figure 6b étant dédoublée en une paire de photodiodes). Il devient alors possible d'utiliser la différence des tensions fournies par les deux photo-diodes, comme indicative de la présence de lumière parasite. On utilise à cet effet un amplificateur différentiel, ou mieux un comparateur, assorti d'un seuil (pour éliminer les perturbations non significatives), ou mieux encore deux comparateurs, qui prennent respectivement la différence de tension dans un sens et en sens inverse. Ainsi, on compare la différence de réponse à un seuil, en valeur absolue (ou à deux seuils différents, suivant le signe de la différence de réponse).

L'une des photodiodes sert en outre à la mesure de base décrite plus haut notamment en référence à la figure 5. On peut aussi utiliser toute combinaison linéaire, en principe additive, des tensions de sortie des deux photo-diodes.

Les modes de réalisation décrits ci-dessus ne sont pas les seuls envisageables.

On pourrait par exemple concevoir que l'inclinaison des photodiodes ne soit pas identique, afin de tenir compte d'une forte dissymétrie du lieu de mesure. Il faudrait alors utiliser des cales de dimensions différentes, selon l'inclinaison désirée pour chaque photodiode.

Par ailleurs, on peut également envisager une gestion totalement autonome de chaque capteur, afin de tenir compte de zones d'ombre introduites par l'environnement proche ou lointain, lors d'une période de mesure. Cela nécessiterait d'installer deux voies de comparaison indépendantes, chacune ayant un seuil de déclenchement différent.

Enfin, on pourrait envisager un dispositif de détection n'utilisant pas de moyens de temporisation, ce qui permettrait une détection permanente tout au long de la journée, puisque la plus grande fiabilité des photodiodes infrarouges autoriserait des mesures en continu, sans crainte de défaillances de leur part.

## Revendications

1. Dispositif de commande de l'éclairage public, comprenant :
- un capteur, pour mesurer, en un lieu choisi, l'intensité de la lumière ambiante; et
- des moyens de traitement, pour comparer l'intensité mesurée par le capteur, à un seuil, et pour ouvrir ou fermer un circuit d'éclairage (10), en fonction de ladite comparaison,
**caractérisé en ce que** le capteur comprend au moins une photodiode infrarouge, ledit capteur étant agencé pour mesurer sélectivement l'intensité de la lumière ambiante, et plus particulièrement solaire, dans la bande spectrale infrarouge, et essentiellement pas dans la bande spectrale visible.

2. Dispositif selon la revendication 1, **caractérisé en ce que** le capteur comprend au moins une photodiode infrarouge (2) calibrée et centrée sur une longueur d'onde d'environ 950 nanomètres, et **en ce que** ladite photodiode (2) est logée dans un boîtier (1) destiné à être placé en un lieu ouvert, sans protection particulière.

3. Dispositif selon la revendication 2, **caractérisé en ce que** la photodiode (2) est positionnée dans le boîtier de telle sorte qu'une fois ledit boîtier installé ladite photodiode est parallèle au sol, sa face de détection étant orientée vers le ciel.

4. Dispositif selon la revendication 1, **caractérisé en ce que** le capteur comprend un jeu de deux photodiodes (2) infrarouges, calibrées et centrées sur une longueur d'onde d'environ 950 nanomètres, lesdites photodiodes (2) étant fixées, chacune, sur un support incliné (3) de sorte que leurs faces de détection soient orientées vers le ciel une fois installées.

5. Dispositif selon la revendication 4, **caractérisé en ce que** les deux photodiodes (2) sont positionnées symétriquement selon des plans inclinés s'élevant au-dessus d'une base, formée par une cloison (4), lesquelles réalisent avec la base une structure triangulaire.

6. Dispositif selon l'une des revendications 4 et 5, **caractérisé en ce que** le jeu de photodiodes (2) est logé dans un boîtier (1) destiné à être installé en un lieu ouvert, sans protection particulière, et **en ce que** l'inclinaison des supports (3) est ajustable en fonction de la topologie du lieu de mesure.

7. Dispositif selon la revendication 6, **caractérisé en ce que** le boîtier (1) est installé sur le lieu de mesure, de telle sorte que les photodiodes (2) soient respectivement orientées l'une vers l'ouest, l'autre vers l'est, une fois ledit boîtier installé en ledit lieu.

8. Dispositif selon l'une des revendications précédentes, **caractérisé en ce que** les moyens de traitement comprennent un comparateur électronique (7) de courant ou de tension, apte à comparer l'intensité lumineuse mesurée à un seuil en courant ou en tension, respectivement, préalablement fixé.

9. Dispositif selon l'une des revendications précédentes, **caractérisé en ce que** les moyens de traitement comprennent en outre une temporisation (5) programmable apte à mémoriser au moins une durée de temporisation.

10. Dispositif selon la revendication 9, **caractérisé en ce que** les moyens de traitement sont agencés pour ne prendre en compte le franchissement du seuil que s'il perdure au moins pendant ladite durée de temporisation.

11. Dispositif selon l'une des revendications précédentes, **caractérisé en ce que** les moyens de traitement comprennent également des moyens de réception (6) aptes à recevoir un ordre, émis par un émetteur distant (13), pour anticiper ou retarder l'ouverture ou la fermeture du circuit d'éclairage (10).

12. Dispositif selon l'une des revendications 2 à 11, **caractérisé en ce que** le boîtier (1) comporte, en regard de la face de détection de la ou des photodiodes (2), une fenêtre transparente au moins au rayonnement infrarouge dans la bande spectrale comprise entre 730 nanomètres et 1200 nanomètres, ladite fenêtre étant bombée (1a), et normalement tournée vers le ciel.

13. Procédé de commande de l'éclairage public, dans lequel :
a) on mesure, en un lieu choisi, l'intensité de la lumière ambiante; et
b) on déclenche ou on interrompt l'éclairage public, en fonction d'une comparaison entre l'intensité détectée et un seuil préalablement fixé,
**caractérisé en ce que**, à l'étape a), on mesure l'intensité de la lumière ambiante dans la bande spectrale infrarouge, et essentiellement pas dans la bande spectrale visible.

## Patentansprüche

1. Vorrichtung zum Steuern einer öffentlichen Beleuchtungsanlage, enthaltend:
- einen Detektor zum Messen der Intensität des Umgebungslichts an einem ausgewählten Ort; und
- Verarbeitungseinrichtungen zum Vergleichen der von dem Detektor gemessenen Intensität mit einem Schwellenwert, um einen Beleuchtungsschaltkreis (10) in Abhängigkeit von dem Vergleich zu öffnen oder zu schließen,
**dadurch gekennzeichnet, daß** der Detektor wenigstens eine Infrarot-Photodiode enthält und derart eingerichtet ist, daß er selektiv die Intensität des Umgebungslichts, und spezieller des Sonnenlichts, im Infrarot-Spektralbereich und im wesentlichen nicht im sichtbaren Spektralbereich mißt.

2. Vorrichtung nach Anspruch 1, **dadurch gekennzeichnet, daß** der Detektor wenigstens eine Infrarot-Photodiode (2) enthält, die auf eine Wellenlänge von etwa 950 nm abgestimmt und zentriert ist, und daß die Photodiode (2) in einem Gehäuse (1) untergebracht ist, das dazu bestimmt ist, an einem offenen Ort ohne speziellen Schutz installiert zu werden.

3. Vorrichtung nach Anspruch 2, **dadurch gekennzeichnet, daß** die Photodiode (2) in dem Gehäuse derart angebracht ist, daß im installierten Zustand des Gehäuses die Photodiode parallel zum Boden ist und ihre Detektorfläche gegen den Himmel weist.

4. Vorrichtung nach Anspruch 1, **dadurch gekennzeichnet, daß** der Detektor aus einem Satz aus zwei Infrarot-Photodioden (2) besteht, die auf eine Wellenlänge von etwa 950 nm abgestimmt und zentriert sind und die jeweils auf einem geneigten Träger (3) derart angebracht sind, daß nach Installation ihre Detektorflächen gegen den Himmel weisen.

5. Vorrichtung nach Anspruch 4, **dadurch gekennzeichnet, daß** die beiden Photodioden (2) symmetrisch auf geneigten Ebenen angeordnet sind, die sich über eine Basis erheben, die von einer Trennwand (4) gebildet ist, wobei sie mit der Basis einen dreieckigen Aufbau bilden.

6. Vorrichtung nach einem der Ansprüche 4 und 5, **dadurch gekennzeichnet, daß** der Satz Photodioden (2) in einem Gehäuse (1) untergebracht ist, das dazu bestimmt ist, an einem offenen Ort ohne speziellen Schutz installiert zu werden, und daß die Neigung der Träger (3) in Abhängigkeit von der Topologie des Meßorts einstellbar ist.

7. Vorrichtung nach Anspruch 6, **dadurch gekennzeichnet, daß** das Gehäuse (1) auf dem Meßort derart installiert ist, daß die Photodioden (2) nach Westen bzw. nach Osten gerichtet sind, wenn das Gehäuse an dem genannten Ort installiert ist.

8. Vorrichtung nach einem der vorhergehenden Ansprüche, **dadurch gekennzeichnet, daß** die Verarbeitungseinrichtungen einen elektronischen Stromoder Spannungskomparator (7) enthalten, der dazu eingerichtet ist, die gemessene Lichtintensität mit einem Strom- oder Spannungsschwellenwert zu vergleichen, der zuvor festgelegt worden ist.

9. Vorrichtung nach einem der vorhergehenden Ansprüche, **dadurch gekennzeichnet, daß** die Verarbeitungseinrichtungen weiterhin ein programmierbares Verzögerungsglied (5) enthalten, das dazu eingerichtet ist, wenigstens eine Verzögerungszeit zu speichern.

10. Vorrichtung nach Anspruch 9, **dadurch gekennzeichnet, daß** die Verarbeitungseinrichtungen dazu eingerichtet sind, die Überschreitung des Schwellenwertes nicht zu berücksichtigen, solange nicht wenigstens die genannte Verzögerungszeit verstrichen ist.

11. Vorrichtung nach einem der vorhergehenden Ansprüche, **dadurch gekennzeichnet, daß** die Verarbeitungseinrichtungen auch Empfangseinrichtungen (6) aufweisen, die dazu eingerichtet sind, einen von einem entfernten Sender (13) abgegebenen Befehl aufzunehmen, um das Öffnen oder Schließen des Beleuchtungsschaltkreises zeitlich vorzuziehen oder zu verzögern.

12. Vorrichtung nach einem der Ansprüche 2 bis 11, **dadurch gekennzeichnet, daß** das Gehäuse (1) gegenüber der Detektorfläche der Photodiode(n) (2) ein Fenster aufweist, das für wenigstens die Infrarotstrahlung im Spektralbereich zwischen 730 nm und 1.200 nm transparent ist und das gewölbt (1) und normalerweise gegen den Himmel gerichtet ist.

13. Verfahren zum Steuern einer öffentlichen Beleuchtungsanlage, bei dem man:
a) an einem gewählten Ort die Intensität des Umgebungslichts mißt; und
b) die öffentliche Beleuchtung in Abhängigkeit von einem Vergleich zwischen der ermittelten Intensität und einem zuvor festgesetzten Schwellenwert einschaltet oder unterbricht,
**dadurch gekennzeichnet, daß** man im Schritt (a) die Intensität des Umgebungslichts im Infrarot-Spektralbereich und im wesentlichen nicht im sichtbaren Spektralbereich mißt.

## Claims

1. Device for controlling public lighting, comprising:
■ a sensor for measuring, in a chosen location, the intensity of ambient light; and
■ processing means for comparing the intensity measured by the sensor to a threshold and for switching on or off a lighting circuit (10) as a function of the comparison,
**characterised in that** the sensor comprises at least one infrared photodiode, the sensor being adapted to measure selectively the intensity of ambient light, and more particularly sunlight, in the infrared spectrum, and essentially not in the visible spectrum.

2. Device according to claim 1, **characterised in that** the sensor comprises at least one infrared photodiode (2) calibrated and centred on a wavelength of about 950 nanometres, and **in that** the photodiode (2) is housed in a housing (1) intended to be placed in an open location without special protection.

3. Device according to claim 2, **characterised in that** the photodiode (2) is located in the housing in such a manner that once the housing is installed the photodiode is parallel to the ground, its detection face being oriented towards the sky.

4. Device according to claim 1, **characterised in that** the sensor comprises a set of two infrared photodiodes (2), calibrated and centred on a wavelength of about 950 nanometres, the photodiodes (2) being each fixed on an inclined support (3) so that their detection faces are oriented towards the sky once installed.

5. Device according to claim 4, **characterised in that** the two photodiodes (2) are positioned symmetrically in inclined planes rising above a base formed by a partition wall (4), which form together with the base a triangular structure.

6. Device according to one of claims 4 and 5, **characterised in that** the set of photodiodes (2) is housed in a housing (1) intended to be installed in an open location, without special protection, and **in that** the inclination of the supports (3) is adjustable depending on the topology of the measuring site.

7. Device according to claim 6, **characterised in that** the housing (1) is installed on a measuring site in such a manner that the photodiodes (2) are respectively oriented one to the west and the other to the east once the housing is installed at the site.

8. Device according to one of the preceding claims, **characterised in that** the processing means comprise an electronic current or voltage comparator (7) capable of comparing the light intensity measured to a current or voltage threshold respectively which has been fixed in advance.

9. Device according to one of the preceding claims, **characterised in that** the processing means further comprise a programmable time delay (5) capable of memorising at least one time delay duration.

10. Device according to claim 9, **characterised in that** the processing means are adapted so as not to take into account crossing of the threshold unless it lasts at least for the duration of the time delay.

11. Device according to one of the preceding claims, **characterised in that** the processing means also comprise receiving means (6) capable of receiving a command, transmitted by a remote transmitter (13), in order to anticipate or retard opening or closing of the lighting circuit (10).

12. Device according to one of claims 2 to 11, **characterised in that** the housing (1) comprises, opposite the detection face of the photodiode(s) (2), a window transparent at least to infrared radiation in the spectral band of between 730 nanometres and 1200 nanometres, the window being convex (1a) and normally turned towards the sky.

13. Method of controlling public lighting, in which:
a) in a selected location the intensity of ambient light is measured; and
b) public lighting is switched on or off according to a comparison between the intensity detected and a threshold fixed in advance,
**characterised in that** at stage a), the intensity of ambient light is measured in the infrared spectrum, and essentially not in the visible spectrum.
